# EUROPÄISCHE PATENTSCHRIFT

(11) **EP 2 433 838 B1**
(45) Veröffentlichungstag und Bekanntmachung des Hinweises auf die Patenterteilung: **23.04.2014**
(21) Anmeldenummer: 10180683.4
(22) Anmeldetag: 28.09.2010
(51) Int. Cl.: B60R 1/062, B60R 1/07

(54) **Außenspiegel**
External mirror
Rétroviseur extérieur

(43) Veröffentlichungstag der Anmeldung: 28.03.2012
(73) Patentinhaber: SMR Patents S.à.r.l., 1653 Luxembourg (LU)
(72) Erfinder: Negel, Raimund, 72669, Unterensingen (DE)
(74) Vertreter: Weber-Bruls, Dorothée

(56) Entgegenhaltungen:
- EP-A1- 0 312 232
- EP-A2- 0 654 377
- DE-U1- 8 531 670
- FR-A1- 2 426 590

## Beschreibung

Die Erfindung bezieht sich auf einen Außenspiegel für ein Kraftfahrzeug, insbesondere auf einen Außenspiegel, welcher an Kraftfahrzeugtüren befestigt ist, um eine Außen-Rückblickansicht für den Kraftfahrzeugfahrer zur Verfügung zu stellen. Genauer gesagt betrifft die Erfindung einen Außenspiegel nach dem Oberbegriff von Anspruch 1.

Für außen an einer Kraftfahrzeugtür angebrachte Fahrzeugspiegelaufbauten ist es lange Zeit wünschenswert gewesen, dass sie entweder mit Hilfe eines Antriebes, durch manuelle Betätigung oder in Reaktion auf unbeabsichtigte auf sie einwirkende Schläge von einer normalen Arbeitsstellung in eine eingeklappte Stellung bewegt werden können. Viele Spiegel, welche diese Fähigkeit aufweisen, sind einfache Schwenkspiegel, welche um eine im Wesentlichen vertikale Achse schwenkbar angeordnet sind. Einfache Schwenkspiegelaufbauten weisen eine Trägeranordnung, die an dem Kraftfahrzeug, beispielsweise an der Fahrzeugtür, befestigt ist, und eine Spiegelgehäuseanordnung auf, welche normalerweise ein einstellbares Spiegelelement und eine angetriebene Schwenkanordnung trägt, welche ermöglicht, dass die Gehäuseanordnung im Bezug auf die Trägeranordnung um die im wesentlichen Vertikalachse zwischen der Arbeitsstellung und der eingeklappten Stellung im Bezug auf das Fahrzeug in Reaktion auf eine Antriebsbetätigung der Schwenkanordnung geschwenkt werden kann.

### Stand der Technik

Gattungsgemäße Rückspiegel weisen im Allgemeinen einen Spiegelfuß auf, welcher an der Trägeranordnung bzw. dem Spiegelträger befestigt ist. Dabei ist der Spiegelträger um die vertikale Achse am Spiegelfuß schwenkbar befestigt. Der Spiegelfuß kann dabei mit geeigneten Befestigungsmitteln am Kraftfahrzeug befestigt werden. Ferner können an dem schwenkbar gelagerten Spiegelträger die verschiedenen für die Funktion eines Außenspiegels erforderlichen Bauteile, beispielsweise ein Spiegelelement, ein Verstellmechanismus, ein Verstellantrieb, eine Heizeinrichtung und das Spiegelgehäuse befestigt werden.

Aufgrund zulassungsrechtlicher Vorschriften ist die um die vertikale Achse schwenkbare Lagerung des Spiegelträgers auf dem Spiegelfuß bei modernen Kraftfahrzeugen zwingend erforderlich: Dies dient insbesondere der Verringerung der Verletzungsgefahr bei der Kollision eines Verkehrsteilnehmers mit den von der Karosserie des Kraftfahrzeuges seitlich abstehenden Außenrückspiegeln. Ferner dient das Schwenken des Rückspiegels um die vertikale Schwenkachse einem Einklappvorgang des Rückspiegels an die Karosserie, um beispielsweise beim Rangieren in engen Tordurchfahrten, Garagen oder dergleichen einen Kontakt der Rückspiegel mit den entsprechenden Torzargen oder Garagenwänden zu verhindern und die Rückspiegel vor einer Beschädigung zu bewahren.

Aus der DE 102004039261 ist ein Außenspiegel bekannt, der auf der Türbrüstung des Kraftfahrzeugs angebracht ist. Über zwei Verstellmotoren wird der Spiegel sowohl um einen vertikale Achse, als auch über einen zweiten Motor um einen horizontale Achse verschwenkt.

Dieser Ansatz unterscheidet sich dabei nicht wesentlich vom Stand der Technik, in dem ebenfalls zwei Antriebe verwendet werden, nämlich ein Glasantrieb und ein Abklappantrieb. Durch die Anbringung eines Motors im Spiegelkopf ist der Spiegelkopf schwer und die Auslegung des Spiegelfußes muss dem Gewicht Rechnung tragen.

Aus der EP2165886 ist ein Außenspiegel bekannt, der auf einen Glasverstellantrieb im Spiegelkopf verzichtet und die Einstellung der Spiegelposition über lineare Verstellmotoren erzielt. Die Anordnung der paarweise betrieben längenveränderlichen Elemente ist für den Anbau an der Seite eines Fahrzeugs, im Spiegeldreieck optimiert. Zudem sind vier Verstellmotoren notwendig.

Die DE 85 31 670 U1 beschreibt einen Außenspiegel mit einem feststehenden Spiegel, der mit einem Kugelgelenk und mit einem Spiegelfuß am Fahrzeug befestigt ist. Der Außenspiegel wird durch Anlenkung an das im Spiegelkopf liegende Kugelgelenk verstellt. Dazu dienen zwei Motoren, die über ein Kardangelenk und Gewindespindeln an dem einzigen Kugelgelenk des Spiegels indirekt angreifen. Die Motoren sind dabei im Spiegelkopf angeordnet, der dadurch schwer wird.

Es ist somit Aufgabe der vorliegenden Erfindung, den gattungsgemäßen Außenspiegel derart weiterzuentwickeln, dass er die oben genannten Nachteile beseitigt, insbesondere die Funktionen des Außenspiegels erhält, obwohl im Spiegelkopf kein Glasverstellantrieb sitzt. Erfindungsgemäß wird diese Aufgabe durch das Kennzeichen von Anspruch 1 gelöst. Demnach wird ein Außenspiegel zur Montage an einem Fahrzeug mit einem Spiegelfuß und einem auf dem Spiegelfuß aufgesetzten Spiegelkopf bereitgestellt, bei dem das spiegelnde Element starr mit dem Gehäuse des Spiegelkopfs verbunden ist, der Spiegelkopf und Spiegelfuß über ein Kugelgelenk drehbar miteinander verbunden, und die Einstellung des spiegelnden Elements über zwei mit Aktuatoren längenveränderliche Stangen, die zwischen Spiegelkopf und Spiegelfuß angeordnet sind und zwei senkrecht zueinander liegende Drehachsen definieren, erfolgt.

### Beschreibung der Erfindung

Ausführungen der Erfindung sind in den Figuren dargestellt und werden im nachfolgenden erläutert.
Fig. 1 zeigt einen Außenspiegel in Fahrrichtung gesehen von vorne
Fig. 2 zeigt einen Außenspiegel in Fahrrichtung gesehen von hinten
Fig.3 zeigt einen Außenspiegel von der Seite
Fig. 4 zeigt einen Außenspiegel von oben
Fig. 5 zeigt eine Aufsicht auf die Befestigungsebene

Die Figuren zeigen einen Außenspiegel, der aus einem Spiegelkopf 1 und einem Spiegelfuß 7 besteht. Der Spiegelkopf besteht aus Kunststoffbauteilen, die in ansprechender und aerodynamisch sinnvoller Form hergestellt sind. Die Gehäuseabdeckungen umfassen einen Hohlraum, in dem funktionelle Bauteile des Außenspiegels untergebracht sein können. Hier sind als Beispiele elektrische Bauteile wie eine Spiegelheizung, Antenne, Sensoren, beleuchtete Elemente wie Spiegelblinker, Umfeldleuchten, Tagfahrlicht usw. untergebracht.

Der Hohlraum als Aufnahmeraum für elektrische Bauteile steht zur Verfügung, da das vorgestellte Spiegelglasverstellschema keine Anwendung eines Glasverstellantriebs hinter dem Spiegelglas vorsieht. Durch das Weglassen des Glasantriebs hinter dem Spiegelglas wird der Bauraum im Gehäuse frei.

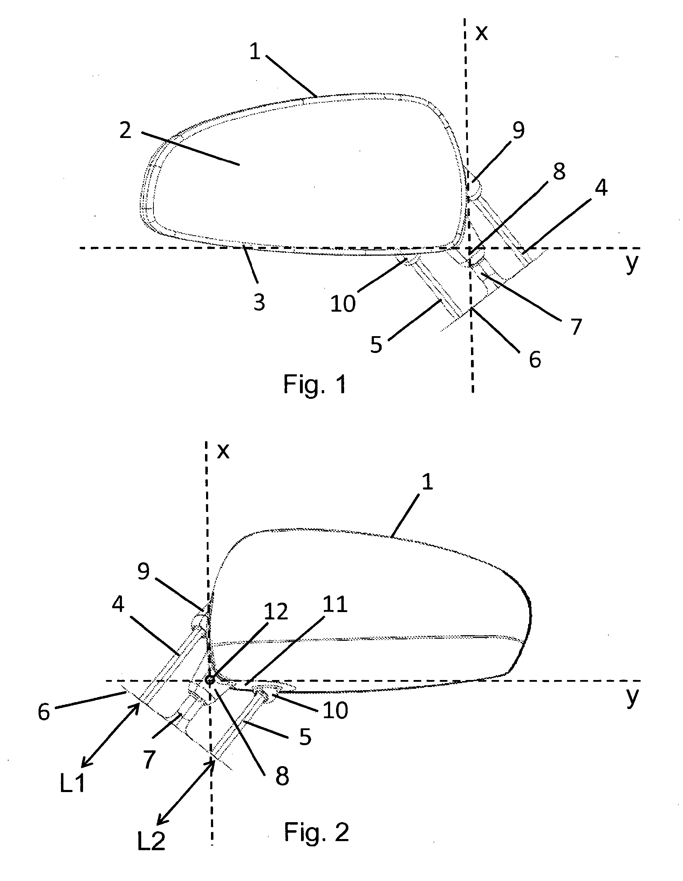

Die Gehäuseabdeckungen werden in Vorderansicht der Fig. 1 von einem spiegelnden Element 2 verschlossen, das in einem Spiegelrahmen 3 fixiert ist. Das spiegelnde Element 2 ist ein gebräuchlicher Metall beschichteter Glasspiegel oder aber ein Kunststoffspiegel, der auf einem Kunststoffsubstrat aufgebracht ist. Da das Spiegelglas direkt in den in die Kunststoffbauteile des Gehäuses befestigt wird, fällt einen Glasträgerplatte als Bauteil ebenfalls weg. Der Spiegelrahmen 3 kann dabei als getrenntes Bauteil ausgeführt sein, der von vorne auf die Gebäudeteile gesteckt wird und das Glas dadurch verklemmt oder der Spiegelrahmen ist direkt am Gehäuse so ausgebildet, dass das Spiegelglas von vorne hineingedrückt werden kann und fixiert ist.

Die Verwendung von Kunststoffglas weist Vorteile auf. Das geringe Gewicht des Kunststoffglases reduziert das Gesamtgewicht des Spiegelkopfes, sodass der Spiegelfuß und der Verstellmechanismus deutlich schwächer ausgelegt werden kann. Der Kunststoffspiegel kann beispielsweise über einen umlaufende Nut des Gehäuses positioniert und über eine Rippe fixiert werden, über die der Kunststoffspiegel während der Montage gedrückt wird. Auch eine Bauform mit einem Kunststoffglas, an das ein Spiegelrahmen gleich angespritzt ist, ist denkbar.

Der Spiegelkopf ist mit dem Spiegelfuß 7 am Fahrzeug 6 montiert, wobei der Spiegelfuß 7 fest und nicht drehbar mit dem Fahrzeug und hier mit der Fahrzeugtür verbunden ist. Der Fuß kann aus Metall oder aus Kunststoff sowie aus Verbundwerkstoffen hergestellt sein. Die Basis des Fußes wird mit einer Trägerplatte in der Fahrzeugtür verschraubt und sitzt, von einer Dichtung zum Türaussenblech abgedichtet, bündig auf der Türbrüstung auf.

Der erfindungsgemäße Außenspiegel ist aber nicht auf seinen Einsatz als Türbrüstungsspiegel limitiert, er kann auch am Spiegeldreieck montiert werden.

Die Montage des Spiegelfußes kann dabei über jeden einem Fachmann geläufige Methode erfolgen.

Neben dem Spiegelfuß 7 stellen zwei längenveränderliche Stangen 4 und 5 die Verbindung zwischen Fahrzeug und Spiegelkopf her. Diese Teleskopstangen werden, von Aktuatoren angetrieben, in ihrer Länge aus- und eingefahren. Für diesen Zweck werden entweder Linearantriebe verwendet oder aber Motoren mit Getrieben zur Umsetzung oder auch pneumatische oder hydraulische Versteller.

Die Antriebe sind dabei entweder direkt in den Teleskopstangen oder an ihrer Befestigung am Fahrzeug angebracht. Die obere Teleskopstange 4 ist mit einem Kugelgelenk 9 mit dem Spiegelkopf verbunden, die untere Teleskopstange 5 mit einem Kugelgelenk 10. Die Anbindung an das Fahrzeug erfolgt ebenfalls über Kugelgelenke, die in der Zeichnung nicht extra ausgeführt sind.

Für eine reproduzierbare Verstellung des Spiegelkopfes mit dem Spiegelglas ist es von Vorteil zwei Verstellachsen zu definieren, die senkrecht zueinander liegen. Daher wird die erste Verstellachse x durch die Verbindung der Mittelpunkte der Kugelgelenke 9 und 8 definiert, sowie eine Verstellachse y senkrecht dazu durch die Mittelpunkte der Kugelgelenke 8 und 10.

Wird die obere Teleskopstange entlang L1 verlängert, dreht sich der Spiegelkopf um die Achse x, bei Verlängerung der unteren Teleskopstange entlang L2, dreht sich der Kopf um die y Achse. In diesem Beispiel liegen die Drehachsen im Koordinatensystem des Fahrzeugs und verlaufen vertikal und horizontal.

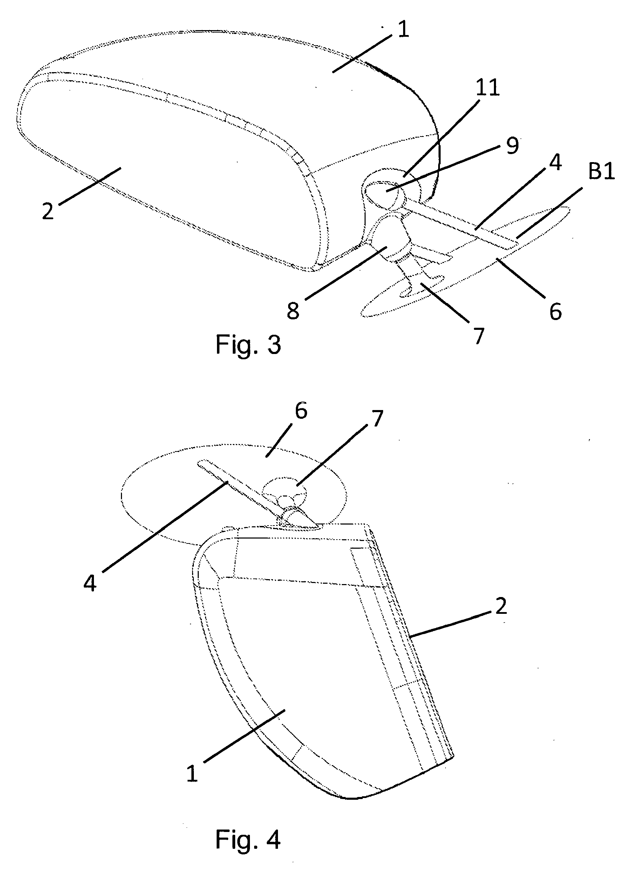

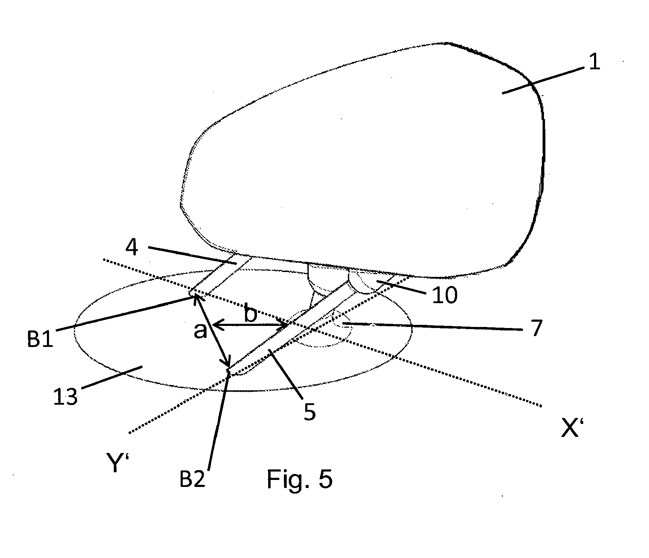

In Fig. 2 ist der Mittelpunkt 12 des Kugelgelenkes 8 des Spiegelfußes eingezeichnet, durch den die beiden Achsen verlaufen. Mit den beiden längenveränderlichen Teleskopstangen kann das Spiegelglas auf den Fahrer eingestellt werden. Der Blick auf Fig. 3 und Fig. 5 zeigt, dass die drei Befestigungspunkte des Spiegelfußes und der beiden Teleskopstangen nicht auf einer Linie liegen, sondern ein Dreieck auf Fahrzeugebene 13 bilden. Dabei beträgt der Abstand der beiden Teleskopstangen den Wert a und der Abstand b bezeichnet die Position der Spiegelfußbefestigung senkrecht zum Abstand a. Der Abstand a kann dabei sehr klein werden, auch einen gemeinsame Befestigung beider Teleskopstangen am Fahrzeug ist dabei möglich. Die Reduzierung des Abstandes a wirkt sich kaum auf die Einstellung des Spiegelglases aus, aber beeinflusst die Stabilität des Aufbaus. Daher ist ein Wert grösser 50 mm vorzuziehen. Der Abstand b von der Verbindungsgeraden beider Befestigungspunkte B1 und B2 der Teleskopstangen am Fahrzeug ist für Abklappbewegung des Spiegelkopfes relevant und darf nicht unter einen Wert von 50 mm fallen.

Die Dimensionen des Dreiecks auf der Fahrzeugebene 13 mit den drei Befestigungspunkten ist stark von den baulichen Gegebenheiten des Fahrzeugs beeinflusst.

Es ist auch die Projektion der x und y-Achse auf der Fahrzeugebene 13 mit der Bezeichnung x' und y' eingezeichnet.

Je nach Anbaulage des Außenspiegels und Winkel des Spiegelfußes ist es auch sinnvoll die Drehachsen bezüglich der Koordinaten des Fahrzeugs zu kippen. Auch ist es möglich die beiden Drehachsen nicht senkrecht zueinander anzuordnen. Eine solche Anordnung erfordert eine angepasste Steuerung der Drehbewegung um die gewünschte Spiegelposition zu erzielen.

Auch die Befestigungspunkte der Kugelgelenke 8, 9,10 am Spiegelkopf müssen nicht auf einer Geraden liegen. Die Kugelgelenke sind mit einer Anlenkplatte 11 am Spiegelkopf verbunden. Diese Platte kann aus Kunststoff oder Metall hergestellt sein und dient als Lager für die Befestigung des Bewegungsmechanismus.

Auch die Funktion des Abklappens in die Fahrt- und die Gegenfahrtrichtung lässt sich mit dem Mechanismus realisieren. Die Bewegung erfolgt über eine parallele Veränderung der Länge beider Teleskopstangen. Werden beide Teleskopstangen verlängert klappte der Spiegel in Gegenfahrtrichtung ab. Werden beide Stangen verkürzt legt sich der Spiegel in Fahrtrichtung an die Kontur des Fahrzeugs an.

Als Sicherheitsfunktion ist bei einem Aufprall auf den Spiegel ein Abklappen möglich, wobei die Teleskopstangen sich zusammenschieben oder verlängern. Dafür muss im Antrieb der Teleskopstangen einen Rutschkupplung oder einen ähnliche Anordnung vorhanden sein, um einen schnelle Längenveränderung zuzulassen.

Für die Versorgung der elektrischen Verbraucher im Spiegelkopf wird eine elektrische Verbindung durch den Spiegelfuß und das Kugelgelenk in den Spiegelkopf geführt.

Die gezeigte Ausführungsform weist keinen Spiegelfußabdeckung auf, die den eigentlichen Spiegelfuß 7 sowie die Teleskopstangen 4 und 5 verdecken würde.

Für die vorgestellte technische Lösung kommt nur einen flexible Spiegelfußabdeckung in Frage, die den Bewegungen folgen kann. Hier sind als Beispiel textile Materialien mit metallischer Beschichtung oder auch metallische Gewebe einsetzbar.

## Patentansprüche

1. Außenspiegel zur Montage an einem Fahrzeug (6) mit einem Spiegelfuß (7) und einem auf den Spiegelfuß (7) aufgesetzten Spiegelkopf (1), wobei
das spiegelnde Element (2) starr mit dem Gehäuse des Spiegelkopfs verbunden ist, Spiegelkopf (1) und Spiegelfuß (7) über ein Kugelgelenk (8) drehbar miteinander verbunden sind,
der Spiegelkopf (1) mit dem Spiegelfuß (7) am Fahrzeug (6) montiert ist, und
die Einstellung des spiegelnden Elements über zwei mit Aktuatoren längenveränderliche Stangen (4,5) erfolgt,
**dadurch gekennzeichnet, dass**
neben dem Spiegelfuß (7) die zwei längenveränderlichen Stangen (4,5), außerhalb des Spiegelkopfes (1), die Verbindung zwischen Fahrzeug (6) und Spiegelkopf (1) herstellen, und
die zwei längenveränderlichen Stangen (4, 5) zwei Drehachsen für den Spiegelkopf definieren, die durch das Kugelgelenk (8) verlaufen.

2. Außenspiegel nach Anspruch 1 **dadurch gekennzeichnet, dass**
die längenveränderliche Stangen (4,5) fahrzeugseitig über Kugelgelenke am Fahrzeug befestigt sind und/oder über zwei Kugelgelenke (9,10) am Spiegelkopf (1) angreifen.

3. Außenspiegel nach Anspruch 2, **dadurch gekennzeichnet, dass**
die Drehachsen durch die Verbindungsgeraden zwischen den spiegelkopfseitigen Kugelgelenken (9,8 und 10,8) definiert sind.

4. Außenspiegel nach einem der vorhergehenden Ansprüche, **dadurch gekennzeichnet, dass** die Drehachsen senkrecht zueinander liegen.

5. Außenspiegel nach einem der Ansprüche 2 bis 4, **dadurch gekennzeichnet, dass** die spiegelkopfseitigen Kugelgelenke (9,10) der längenveränderliche Stangen (4,5) und das Kugelgelenk (8) des Spiegelfußes (7) in eine Anlenkplatte (11) des Spiegelkopfes (1) eingreifen.

6. Außenspiegel nach einem der vorhergehenden Ansprüche, **dadurch gekennzeichnet, dass** ein Rahmen (3) das spiegelnde Element (2) im Spiegelkopf (1) fixiert.

7. Außenspiegel nach einem der vorhergehenden Ansprüche, **dadurch gekennzeichnet, dass** sich die beiden Drehachse x und y im Mittelpunkt (12) des Kugelgelenkes (8) zwischen Spiegelkopf (1) und Spiegelfuß (7) treffen.

8. Außenspiegel nach einem der vorhergehenden Ansprüche, **dadurch gekennzeichnet, dass** die fahrzeugseitigen Befestigungspunkte (B1, B2) der längenveränderlichen Stangen (4,5) und der fahrzeugseitige Befestigungspunkt des Spiegelfußes (7) ein Dreieck in der Ebene des Fahrzeugs (13) bilden.

9. Außenspiegel nach Anspruch 8, **dadurch gekennzeichnet, dass**
der Abstand b des Spiegelfußes (7) von der Verbindungsgeraden (a) der Befestigungspunkte (B1, B2) der Teleskopstangen mindestens 50 mm beträgt.

10. Außenspiegel nach einem der vorhergehenden Ansprüche, **dadurch gekennzeichnet, dass** der Spiegelkopf ein Kunststoffglas enthält.

## Claims

1. An external mirror for mounting on a vehicle (6) having a mirror base (7) and a mirror head (1) fitted to the mirror base (7), wherein
the reflective element (2) is fixedly connected with the housing of the mirror head, the mirror head (1) and the mirror base (7) are rotatably connected with each other by a spherical joint (8),
the mirror head (1) with the mirror base (7) is mounted on the vehicle (6), and
the reflective element is adjusted by two variable length bars (4, 5) with actuators, **characterized in that**
in addition to the mirror base (7), the two variable length bars (4, 5), outside the mirror head (1), establish the connection between the vehicle (6) and the mirror head (1), and
that the two variable length bars (4, 5) define two rotational axes for the mirror head, which extend through the spherical joint (8).

2. The external mirror according to claim 1, **characterized in that** the variable length bars (4, 5) are fixed to the vehicle, on the vehicle side, by means of spherical joints and/or engage at the mirror head (1) by means of two spherical joints (9, 10).

3. The external mirror according to claim 2, **characterized in that** the rotational axes are defined by the connecting straight lines between the spherical joints (9, 8 and 10, 8) on the mirror head side.

4. The external mirror according to any one of the preceding claims, **characterized in that** the rotational axes are perpendicular to each other.

5. The external mirror according to any one of claims 2 to 4, **characterized in that** the spherical joints (9, 10) of the variable length bars (4, 5) on the mirror body side and the spherical joint (8) of the mirror base (7) engage in an articulation plate (11) of the mirror head (1).

6. The external mirror according to any one of the preceding claims, **characterized in that** a frame (3) fixes the reflective element (2) in the mirror head (1).

7. The external mirror according to any one of the preceding claims, **characterized in that** the two rotational axes x and y meet in the centre (12) of the spherical joint (8) between the mirror head (1) and the mirror base (7).

8. The external mirror according to any one of the preceding claims, **characterized in that** the fixing points (B1, B2) of the variable length bars (4, 5) on the vehicle side and the fixing point of the mirror base (7) on the vehicle side form a triangle in the plane of the vehicle (13).

9. The external mirror according to claim 8, **characterized in that** the distance b of the mirror base (7) from the connecting straight line (a) of the fixing points (B1, B2) of the telescopic bars is at least 50 mm.

10. The external mirror according to any one of the preceding claims, **characterized in that** the mirror head consists of a plastic glass.

## Revendications

1. Rétroviseur extérieur destiné à être monté sur un véhicule automobile (6), ayant une embase de rétroviseur (7) et une tête de rétroviseur (1) installée sur l'embase de rétroviseur (7), dans lequel
un élément miroir (2) est relié de manière rigide au boîtier de la tête de rétroviseur, et la tête de rétroviseur (1) et l'embase de rétroviseur (7) sont reliées l'une avec l'autre de manière pivotante par l'intermédiaire d'une liaison à rotule (8),
la tête de rétroviseur (1) est montée sur le véhicule automobile (6) à l'aide de l'embase de rétroviseur (7), et le réglage de l'élément miroir survient à l'aide de deux tiges (4, 5), dont la longueur peut être modifiée à l'aide d'actionneurs,
**caractérisé en ce que**
à proximité de l'embase de rétroviseur (7), les deux tiges (4,5) dont la longueur peut être modifiée, à l'extérieur de la tête de rétroviseur (1), établissent la liaison entre le véhicule automobile (6) et la tête de rétroviseur (1), et
les deux tiges (4,5) dont la longueur peut être modifiée définissent deux axes de pivotement pour la tête de rétroviseur, qui s'étendent à travers la liaison à rotule (8).

2. Rétroviseur extérieur selon la revendication 1, **caractérisé en ce que** les tiges (4, 5) dont la longueur peut être modifiée sont fixées sur le côté du véhicule automobile au moyen de liaisons à rotule situées sur le véhicule automobile, et/ou viennent en prise avec deux liaisons à rotule (9, 10) sur la tête de rétroviseur (1).

3. Rétroviseur extérieur selon la revendication 2, **caractérisé en ce que** les axes de pivotement sont définis par les droites de liaison entre les liaisons à rotule côté tête de rétroviseur (9, 8 et 10, 8)

4. Rétroviseur extérieur selon l'une quelconque des revendications précédentes, **caractérisé en ce que** les axes de pivotement s'étendent perpendiculairement l'un par rapport à l'autre.

5. Rétroviseur extérieur selon l'une quelconque des revendications 2 à 4, **caractérisée en ce que** les liaisons à rotule (9, 10) côté tête de rétroviseur des tiges dont la longueur peut être modifiée (4, 5) et la liaison à rotule (8) de l'embase de rétroviseur (7) viennent en prise dans une plaque d'articulation (11) de la tête de rétroviseur (1).

6. Rétroviseur extérieur selon l'une quelconque des revendications précédentes, **caractérisé en ce qu'**un cadre (3) de l'élément miroir (2) est fixé sur la tête de rétroviseur (1).

7. Rétroviseur extérieur selon l'une quelconque des revendications précédentes, **caractérisé en ce que** les deux axes de pivotement x et y se rencontrent au milieu (12) de la liaison à rotule (8) entre la tête de rétroviseur (1) et l'embase de rétroviseur (7).

8. Rétroviseur extérieur selon l'une quelconque des revendications précédentes, **caractérisé en ce que** les points de fixation (B1, B2) côté véhicule automobile des tiges dont la longueur peut être modifiée (4, 5) et le point de fixation côté véhicule automobile de l'embase de rétroviseur (7) forment un triangle dans le plan du véhicule automobile (13).

9. Rétroviseur extérieur selon la revendication 8, **caractérisé en ce que** la distance b de l'embase de rétroviseur (7) par rapport à la droite de liaison (a) des points de fixation (B1, B2) des tiges télescopiques s'élève au moins à 50 mm.

10. Rétroviseur extérieur selon l'une quelconque des revendications précédentes, **caractérisé en ce que** la tête de rétroviseur contient du verre synthétique.
